# EUROPEAN PATENT APPLICATION

(11) **EP 4 579 996 A1**
(43) Date of publication of application: **02.07.2025**
(21) Application number: 24221565.5
(22) Date of filing: 19.12.2024
(51) Int. Cl.: H02J 7/02, B60L 53/24

(54) **CHARGING SYSTEM**

(30) Priority: 22.12.2023 JP 2023216991
(71) Applicant: TOYOTA JIDOSHA KABUSHIKI KAISHA, Toyota-shi, Aichi-ken 471-8571 (JP)
(72) Inventor: NAKAMURA, Ikuhiro, Toyota-shi 471-8571 (JP); SAWAZAKI, Keisuke, Toyota-shi 471-8571 (JP); IKEYAMA, Toshio, Toyota-shi 471-8571 (JP); ISOMURA, Takuya, Toyota-shi 471-8571 (JP); KUWAHARA, Koichi, Toyota-shi 471-8571 (JP); FURUKAWA, Tatsuya, Toyota-shi 471-8571 (JP); KOHYAMA, Takashi, Toyota-shi 471-8571 (JP); MURASAWA, Yohichi, Toyota-shi 471-8571 (JP)
(74) Representative: TBK

(57) **Abstract**

A charging system (2; 102) includes: a motor (30) including a plurality of stator coils (31); a power receiving terminal (40) including a power receiving positive end (40p) and a power receiving negative end (40n), the power receiving negative end (40n) being connected to a battery negative end (60n), and the power receiving positive end (40p) being connected to a neutral point (34) of the motor (30); a capacitor (41); an inverter (10); a plurality of neutral point switching elements (32) each of which connects a second end of a corresponding one of the stator coils (31) to the neutral point (34); and a plurality of diodes (33; 133a), an anode of each of the diodes (33; 133a) being connected to the power receiving negative end (40n), and a cathode of each of the diodes (33; 133a) being connected to the second end of a corresponding one of the stator coils (31).

## Description

### BACKGROUND OF THE INVENTION

### 1. Field of the Invention

The technique disclosed in the present specification relates to charging systems that include an inverter and a motor and that are configured to charge a battery by using switching elements of the inverter and stator coils of the motor as a voltage converter.

### 2. Description of Related Art

A circuit composed of stator coils of a motor and switching elements of an inverter is known to be used as a boost converter. Japanese Unexamined Patent Application Publication No. 2023-114972 (JP 2023-114972 A) discloses a device that charges a battery by a power supply having a lower output voltage than the battery by using stator coils of a motor and lower switching elements of an inverter as a boost converter.

When charging a battery by the device of JP 2023-114972 A, the other ends of a plurality of stator coils are connected to each other at a neutral point, and a power supply is connected to the neutral point. The current of the power supply flows to the stator coils through the neutral point. The voltage of the power supply is boosted by turning on and off lower switching elements of a first inverter. The electric power from the power supply flows to the battery through the neutral point, the stator coils, and upper switching elements of the first inverter. For convenience of description, a charging method in which electric power is transferred to a battery through a neutral point will be referred to as "neutral point charging."

### SUMMARY OF THE INVENTION

The system of JP 2023-114972 A cannot step down the power supply voltage to transfer electric power to the battery. The present specification provides a charging system that uses stator coils of a motor as a reactor and that can charge a battery by using either a power supply having a lower output voltage than the battery or a power supply having a higher output voltage than the battery.

A charging system according to a first aspect of the present disclosure is a charging system configured to transform a voltage of a power supply to charge a battery. The charging system includes: a motor including a plurality of stator coils; a power receiving terminal including a power receiving positive end and a power receiving negative end that are configured to be connected to the power supply, the power receiving negative end being connected to a battery negative end of the battery, and the power receiving positive end being connected to a neutral point of the motor; a capacitor connected between the power receiving positive end and the power receiving negative end; an inverter with a direct current end that is connected to the battery and an alternating current end that is connected to first ends of the stator coils; a plurality of neutral point switching elements each of which connects a second end of a corresponding one of the stator coils to the neutral point; and a plurality of diodes, an anode of each of the diodes being connected to the power receiving negative end, and a cathode of each of the diodes being connected to the second end of a corresponding one of the stator coils.

The charging system according to the first aspect of the present disclosure may further include a controller. The controller may be configured to, when an output voltage of the power supply connected to the power receiving terminal is lower than an output voltage of the battery, close the neutral point switching elements and turn on and off a lower switching element of the inverter to boost the voltage of the power supply and charge the battery. The voltage of the power supply is boosted by the stator coils, so that the battery can be charged by the power supply having a lower output voltage than the battery. The controller may be configured to, when the output voltage of the power supply connected to the power receiving terminal is higher than the output voltage of the battery, turn on and off the neutral point switching elements to step down the voltage of the power supply and charge the battery. The voltage of the power supply is stepped down by the stator coils, so that the battery can be charged by the power supply having a higher output voltage than the battery.

In the charging system according to the first aspect of the present disclosure, the controller may be configured to, when driving the motor by the battery with the power supply not connected to the power receiving terminal, close the neutral point switching elements and turn on and off an upper switching element of the inverter and a lower switching element of the inverter.

The charging system according to the first aspect of the present disclosure may further include a direct charging switch that connects the power receiving positive end to a battery positive end by bypassing the stator coils.

The charging system according to the first aspect of the present disclosure may further include a sub-inverter with a direct current end that is connected to the battery and an alternating current end that is connected to the second ends of the stator coils.

Details and further improvements of the technique disclosed in the present specification will be described in the section "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a circuit diagram of a charging system according to a first embodiment; and
FIG. 2 is a circuit diagram of a charging system according to a second embodiment.

### DETAILED DESCRIPTION OF EMBODIMENTS

### First Embodiment

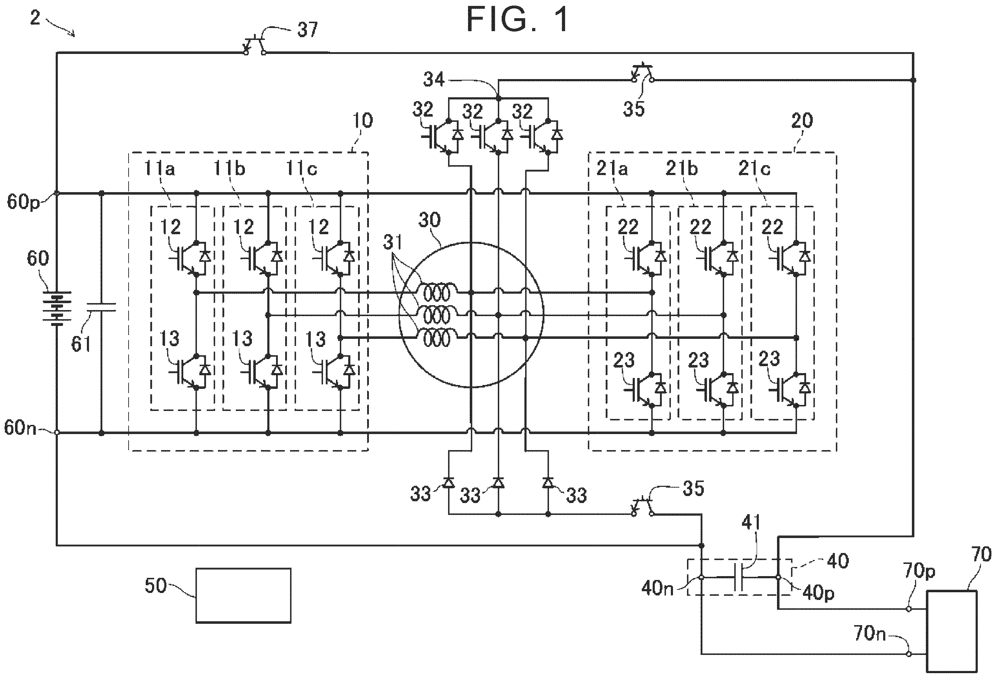

A charging system 2 according to a first embodiment will be described with reference to the drawings. FIG. 1 is a circuit diagram of the charging system 2 according to the first embodiment. The charging system 2 includes a first inverter 10, a second inverter 20, a motor 30, a plurality of neutral point switching elements 32, a plurality of diodes 33, a power receiving terminal 40, and a controller 50. FIG. 1 illustrates a battery 60 and an external power supply 70 in addition to the charging system 2. The external power supply 70 can be connected to and disconnected from the power receiving terminal 40.

The charging system 2 will now be generally described. The charging system 2 can charge the battery 60 by the external power supply 70 connected to the power receiving terminal 40. When charging the battery 60, lower switching elements of the first inverter 10 and stator coils 31 of the motor 30 function as a boost converter. Therefore, the battery 60 can be charged by the external power supply 70 having a lower output voltage than the battery 60. The neutral point switching elements 32, the stator coils 31, and the diodes 33 function as a buck converter. Therefore, the battery 60 can be charged even when the output voltage of the external power supply 70 is higher than the output voltage of the battery 60.

The charging system 2 and the battery 60 are mounted on a battery electric vehicle. The motor 30 is connected to an axle (not shown) of the battery electric vehicle, and the charging system 2 also functions as a drive system that drives the motor 30 with electric power from the battery 60 to move the battery electric vehicle. The motor 30 is a three-phase alternating current (AC) motor, and includes the plurality of stator coils 31. The charging system 2 can drive the motor 30 only when the external power supply 70 is not connected to the power receiving terminal 40. Next, the charging system 2 will be described in detail.

The configuration of the first inverter 10 will be described. The battery 60 is connected to a direct current (DC) end of the first inverter 10, and one ends of the stator coils 31 (that can be regarded as "first ends" in the present application) are connected to an alternating current (AC) end of the first inverter 10. The first inverter 10 includes three sets of first series connections 11a, 11b, and 11c. The three sets of first series connections 11a, 11b, and 11c are connected in parallel between a positive end (battery positive end 60p) of the battery 60 and a negative end (battery negative end 60n) of the battery 60. The high and low potential sides of the first series connections 11a, 11b, and 11c are the DC end of the first inverter 10.

Each of the three sets of first series connections 11a, 11b, and 11c includes a first upper switching element 12 and a first lower switching element 13 that are connected in series. The first upper switching elements 12 are connected to the battery positive end 60p, and the first lower switching elements 13 are connected to the battery negative end 60n. The one ends of the three stator coils 31 are connected to the midpoints (connection points between the first upper switching element 12 and the first lower switching element 13) of the three sets of first series connections 11a, 11b, and 11c. When the controller 50 alternately turns on and off the first upper switching elements 12 and the first lower switching elements 13, an AC current is output from the midpoints. The midpoints of the first series connections 11a, 11b, and 11c are the AC end of the first inverter 10.

The configuration of the second inverter 20 will be described. The battery 60 is connected to a DC end of the second inverter 20, and the other ends of the stator coils 31 (that can be regarded as "second ends" in the present application) are connected to an AC end of the second inverter 20. The second inverter 20 includes three sets of second series connections 21a, 21b, and 21c. The three sets of second series connections 21a, 21b, and 21c are connected in parallel between the battery positive end 60p and the battery negative end 60n. The high and low potential sides of the second series connections 21a, 21b, and 21c are the DC end of the second inverter 20.

Each of the three sets of second series connections 21a, 21b, and 21c includes a second upper switching element 22 and a second lower switching element 23 that are connected in series. The second upper switching elements 22 are connected to the battery positive end 60p, and the second lower switching elements 23 are connected to the battery negative end 60n. The other ends of the three stator coils 31 are connected to the midpoints (connection points between the second upper switching element 22 and the second lower switching element 23) of the three sets of second series connections 21a, 21b, and 21c. When the controller 50 alternately turns on and off the second upper switching elements 22 and the second lower switching elements 23, an AC current is output from the midpoints. The midpoints of the second series connections 21a, 21b, and 21c are the AC end of the second inverter 20.

Freewheeling diodes are connected in inverse parallel to the switching elements of the first and second inverters 10, 20. Each of the freewheeling diodes may be an element different from the switching element, or may be a diode element contained in the switching element.

The charging system 2 includes the neutral point switching elements 32. Each of the neutral point switching elements 32 connects the other end of a corresponding one of the stator coils 31 to a neutral point 34. When the neutral point switching elements 32 are closed, the stator coils 31 are electrically connected to each other at the neutral point 34. When the neutral point switching elements 32 are opened, the stator coils 31 are electrically disconnected from the neutral point 34.

Freewheeling diodes are connected in inverse parallel to the neutral point switching elements 32. Each of the freewheeling diodes may be an element different from the neutral point switching element 32, or may be a diode element contained in the neutral point switching element 32.

The charging system 2 includes the power receiving terminal 40. The power receiving terminal 40 includes a power receiving positive end 40p to which a positive electrode 70p of the external power supply 70 is connected, and a power receiving negative end 40n to which a negative electrode 70n of the external power supply 70 is connected. A capacitor 41 is connected between the power receiving positive end 40p and the power receiving negative end 40n. A capacitor 61 is connected between the battery positive end 60p and the battery negative end 60n.

The charging system 2 includes a pair of charging switches 35. One of the charging switches 35 is connected between the neutral point 34 and the power receiving positive end 40p, and the other charging switch 35 is connected between the anodes of the diodes 33 and the power receiving negative end 40n. The charging switches 35 are provided in order to completely disconnect the power receiving terminal 40 from the stator coils 31.

As described above, the charging system 2 also functions as a drive system that drives the motor 30 with the electric power from the battery 60. The controller 50 closes the neutral point switching elements 32. When the neutral point switching elements 32 are closed, the other ends of the stator coils 31 are connected to each other at the neutral point 34.

When the neutral point switching elements 32 are closed, the motor 30 functions as a closed type motor with the other ends connected in a Y-connection. The controller 50 stops the second inverter 20 and turns on and off the first upper and lower switching elements 12, 13 of the first inverter 10 as appropriate. An AC current is supplied from the AC end of the first inverter 10 to the stator coils 31, causing the motor 30 to rotate.

When the motor 30 is driven by two inverters (first inverter 10 and second inverter 20), the controller 50 opens the neutral point switching elements 32. In the motor 30, the AC end of the first inverter 10 is connected to the one ends of the stator coils 31, and the AC end of the second inverter 20 is connected to the other ends of the second inverter 20. The motor 30 functions as an open type motor. When the controller 50 turns on and off the switching elements of the first and second inverters 10, 20 as appropriate, the motor 30 rotates. At this time, the motor 30 is driven by the two inverters 10, 20. The motor 30 can therefore output higher torque than when the motor 30 is driven only by the first inverter 10.

The motor 30 is driven only when the external power supply 70 is not connected to the power receiving terminal 40. If the motor 30 is driven with the external power supply 70 connected to the power receiving terminal 40, an unwanted current may flow through the charging system 2. Therefore, when driving the motor 30, the charging switches 35 are opened to completely disconnect the neutral point 34 and the diodes 33 from the power receiving terminal 40.

The charging system 2 can charge the battery 60 either when the output voltage of the external power supply 70 is higher than the output voltage of the battery 60 or when the output voltage of the external power supply 70 is lower than the output voltage of the battery 60. The controller 50 closes the charging switches 35 before charging the battery 60.

First, the operation of the controller 50 when the output voltage of the external power supply 70 connected to the power receiving terminal 40 is lower than the output voltage of the battery 60 will be described.

When the external power supply 70 having a lower output voltage than the battery 60 is connected to the power receiving terminal 40, the controller 50 closes the neutral point switching elements 32. The controller 50 then turns on and off the first lower switching elements 13 of the first inverter 10 as appropriate. When the controller 50 turns on the first lower switching elements 13, a current flows from the external power supply 70 to the capacitor 61 through the neutral point switching elements 32, the stator coils 31, and the first lower switching elements 13, and magnetic energy is stored in the stator coils 31. When the controller 50 switches the first lower switching elements 13 from on to off, the magnetic energy stored in the stator coils 31 is released, and a current is pushed out from the stator coils 31 toward the battery positive end 60p due to an induced electromotive force. At this time, the voltage of the external power supply 70 is boosted. The current flows from the external power supply 70 to the battery 60 through the neutral point switching elements 32, the stator coils 31, and the freewheeling diodes of the first upper switching elements 12. That is, the battery 60 is charged by the external power supply 70 having a lower output voltage than the battery 60.

Next, the operation of the controller 50 when the output voltage of the external power supply 70 connected to the power receiving terminal 40 is higher than the output voltage of the battery 60 will be described. In this case, the controller 50 turns on and off the neutral point switching elements 32 as appropriate. When the controller 50 closes the neutral point switching elements 32, a current flows from the external power supply 70 to the battery 60 through the neutral point switching elements 32, the stator coils 31, and the freewheeling diodes of the first upper switching elements 12. At the same time, magnetic energy is stored in the stator coils 31.

When the controller 50 switches the neutral point switching elements 32 from on to off, the current from the external power supply 70 to the battery 60 stops. At the same time, the magnetic energy stored in the stator coils 31 is released. The released magnetic energy generates an induced electromotive force, and the stator coils 31 suck charge from the capacitor 41 through the diodes 33 and transfers the charge to the battery 60. That is, the neutral point switching elements 32, the stator coils 31, and the capacitor 41 function as a buck converter. The battery 60 is thus charged by the external power supply 70 having a higher output voltage than the battery 60.

The charging system 2 includes a direct charging switch 37 that connects the power receiving positive end 40p to the battery positive end 60p by bypassing the stator coils 31. When the output voltage of the external power supply 70 connected to the power receiving terminal 40 is equal to the output voltage of the battery 60, the controller 50 closes the direct charging switch 37. The external power supply 70 and the battery 60 are thus directly connected to each other. In this case, a current flows from the external power supply 70 to the battery 60 by bypassing the stator coils 31 and the switching elements. Charging the battery 60 via the direct charging switch 37 reduces charging loss.

### Second Embodiment

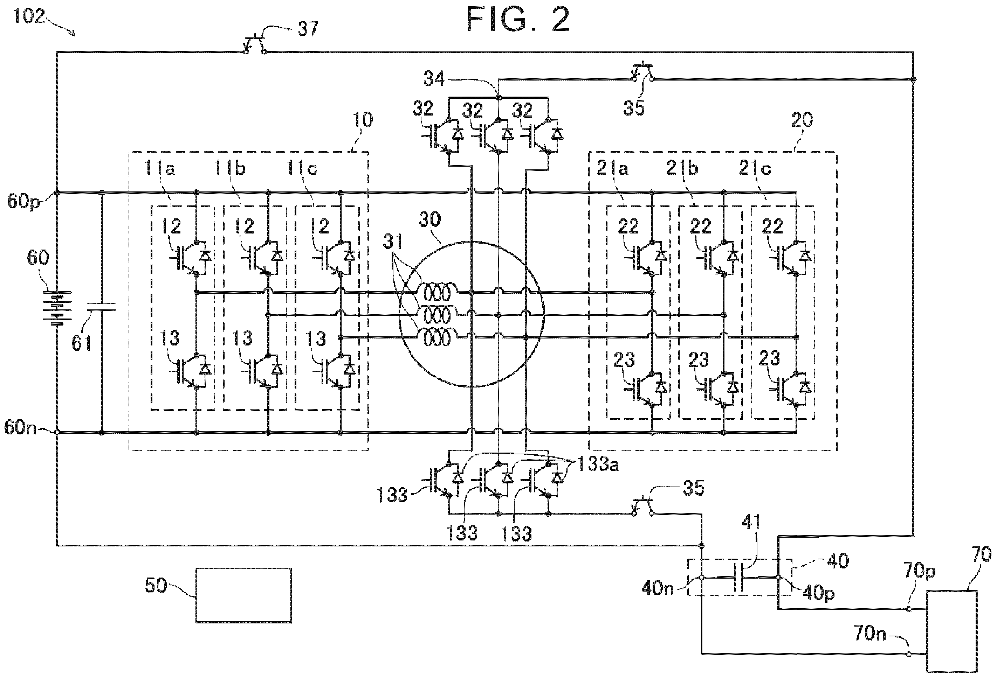

FIG. 2 is a circuit diagram of a charging system 102 according to a second embodiment. In the charging system 102, the diodes 33 in the charging system 2 of the first embodiment are replaced with additional switching elements 133. The configuration of the charging system 102 is otherwise the same as that of the charging system 2 of the first embodiment.

Each of the additional switching elements 133 is provided with a freewheeling diode 133a. The anodes of the freewheeling diodes 133a are connected to the power receiving negative end 40n, and the cathodes of the freewheeling diodes 133a are connected to the other ends of the stator coils 31. The freewheeling diodes play the same role as the diodes 33 in the charging system 2 of the first embodiment. Therefore, when the additional switching elements 133 are open, the charging system 102 operates in the same manner as the charging system 2, and provides the same advantages as the charging system 2.

The advantages of including the additional switching elements 133 will now be described. Instead of the external power supply, an electrical device that consumes electric power is connected to the power receiving terminal 40. When the charging switches 35 are closed and the additional switching elements 133 are turned on and off as appropriate, the voltage of the battery 60 is boosted and output to the power receiving terminal 40. That is, the charging system 102 including the additional switching elements 133 functions as a power supply that can boost the output voltage of the battery 60 and output the boosted voltage to the outside.

An electrical device that consumes electric power is connected to the power receiving terminal 40, and the charging switches 35 and the neutral point switching elements 32 are closed. When the first upper switching elements 12 are turned on and off as appropriate, the voltage of the battery 60 is stepped down by the stator coils 31 and output from the power receiving terminal 40. That is, the charging system 102 can also step down the output voltage of the battery 60 and output the stepped-down voltage to the outside.

Some characteristics of the charging system 2 (102) described in the embodiments will now be described. The battery 60 is connected to the DC end of the first inverter 10, and the stator coils 31 are connected to the AC end of the first inverter 10. The power receiving terminal 40 includes the power receiving positive end 40p and the power receiving negative end 40n, and the external power supply 70 can be connected to the power receiving positive end 40p and the power receiving negative end 40n. The power receiving negative end 40n is connected to the battery negative end 60n, and the power receiving positive end 40p is connected to the neutral point 34 of the motor 30. The capacitor 41 is connected between the power receiving positive end 40p and the power receiving negative end 40n. Each of the neutral point switching elements 32 connects the other end of a corresponding one of the stator coils 31 to the neutral point 34. The anodes of the diodes 33 are connected to the power receiving negative end 40n, and the cathodes of the diodes 33 are connected to the other ends of the stator coils 31. With this condition, the battery 60 can be charged even when the output voltage of the external power supply 70 is higher than the output voltage of the battery 60. The first inverter 10 is an example of the "inverter." The external power supply 70 is an example of the "power supply."

When the output voltage of the external power supply 70 connected to the power receiving terminal 40 is lower than the output voltage of the battery 60, the controller 50 closes the neutral point switching elements 32. The controller 50 then turns on and off the first lower switching elements 13 of the first inverter 10. As a result, the voltage of the external power supply 70 is boosted to the voltage of the battery 60. The electric power from the external power supply 70 is supplied to the battery 60, so that the battery 60 is charged. When the output voltage of the external power supply 70 connected to the power receiving terminal 40 is higher than the output voltage of the battery 60, the controller 50 turns on and off the neutral point switching elements 32. As a result, the voltage of the external power supply 70 is stepped down to the voltage of the battery 60. The electric power from the external power supply 70 is supplied to the battery 60, so that the battery 60 is charged.

When the motor 30 is driven by the battery 60 with the external power supply 70 not connected to the power receiving terminal 40, the controller 50 closes the neutral point switching elements 32. The controller 50 then alternately turns on and off the first upper and lower switching elements 12, 13 of the first inverter 10. The motor 30 is driven by this operation.

The charging system 2 (102) may include the direct charging switch 37 that connects the power receiving positive end 40p to the battery positive end 60p by bypassing the stator coils 31. The charging system 2 (102) may further include the second inverter 20 (sub-inverter) whose DC end is connected to the battery 60 and whose AC end is connected to the other ends of the stator coils 31.

Points to be noted regarding the technique described in the embodiments will be described. The charging switches 35 may be omitted. The charging switches 35 are provided to reduce or prevent disadvantages that occur when the motor 30 is accidentally driven with the external power supply 70 connected.

The second inverter 20 may also be omitted. Even without the second inverter 20, the charging system 2 (102) has the advantages described above. However, providing the second inverter 20 allows the motor 30 to be driven by the two inverters (first inverter 10 and second inverter 20). In other words, the motor 30 can output high torque. The second inverter 20 is an example of the "sub-inverter."

The charging system 2 (102) can drive the motor 30 by the first inverter 10 and the second inverter 20. Therefore, the charging system 2 (102) may also be referred to as "drive charging system."

The expression "switching element is closed" means that devices connected to both ends of the switching element are electrically connected to each other. The expression "switching element is opened" means that devices connected to both ends of the switching element are electrically disconnected from each other. The expression "switching element is closed" is equivalent to the expression "switching element is turned on." The expression "switching element is opened" is equivalent to the expression "switching element is turned off."

Although specific examples of the present invention are described in detail above, they are merely illustrative, and are not intended to limit the scope of the claims. The technique described in the claims includes various modifications and alterations of the specific examples illustrated above. The technical elements illustrated in the present specification or the drawings exhibit technical utility alone or in various combinations, and are not limited to the combinations set forth in the claims as originally filed. The technique illustrated in the present specification or the drawings may achieve a plurality of objects at the same time, and has technical utility by achieving one of the objects.

## Claims

1. A charging system (2; 102) configured to transform a voltage of a power supply (70) to charge a battery (60), the charging system (2; 102) comprising:
a motor (30) including a plurality of stator coils (31);
a power receiving terminal (40) including a power receiving positive end (40p) and a power receiving negative end (40n) that are configured to be connected to the power supply (70), the power receiving negative end (40n) being connected to a battery negative end (60n) of the battery (60), and the power receiving positive end (40p) being connected to a neutral point (34) of the motor (30);
a capacitor (41) connected between the power receiving positive end (40p) and the power receiving negative end (40n);
an inverter (10) with a direct current end that is connected to the battery (60) and an alternating current end that is connected to first ends of the stator coils (31);
a plurality of neutral point switching elements (32) each of which connects a second end of a corresponding one of the stator coils (31) to the neutral point (34); and
a plurality of diodes (33; 133a), an anode of each of the diodes (33; 133a) being connected to the power receiving negative end (40n), and a cathode of each of the diodes (33; 133a) being connected to the second end of a corresponding one of the stator coils (31).

2. The charging system (2; 102) according to claim 1, further comprising a controller (50), wherein the controller (50) is configured to
when an output voltage of the power supply (70) connected to the power receiving terminal (40) is lower than an output voltage of the battery (60), close the neutral point switching elements (32) and turn on and off a lower switching element (13) of the inverter (10) to boost the voltage of the power supply (70) and charge the battery (60), and
when the output voltage of the power supply (70) connected to the power receiving terminal (40) is higher than the output voltage of the battery (60), turn on and off the neutral point switching elements (32) to step down the voltage of the power supply (70) and charge the battery (60).

3. The charging system (2; 102) according to claim 1 or 2, wherein the controller (50) is configured to, when driving the motor (30) by the battery (60) with the power supply (70) not connected to the power receiving terminal (40), close the neutral point switching elements (32) and turn on and off an upper switching element (12) of the inverter (10) and a lower switching element (13) of the inverter (10).

4. The charging system (2; 102) according to claim 1, further comprising a direct charging switch (37) that connects the power receiving positive end (40p) to a battery positive end (60p) by bypassing the stator coils (31).

5. The charging system (2; 102) according to claim 1, further comprising a sub-inverter (20) with a direct current end that is connected to the battery (60) and an alternating current end that is connected to the second ends of the stator coils (31).
